# DEMANDE DE BREVET EUROPEEN

(11) **EP 2 618 034 A1**
(43) Date de publication de la demande: **24.07.2013**
(21) Numéro de dépôt: 13151642.9
(22) Date de dépôt: 17.01.2013
(51) Int. Cl.: F16L 3/12, F16L 3/22, F16L 3/237, H02G 3/32

(54) **Support pour colliers de fixation sans vis à montage rapide**

(30) Priorité: 17.01.2012 FR 1250467
(71) Demandeur: AEML, 45130 Meung sur Loire (FR)
(72) Inventeur: Krzywdziak, Alain, 45100 ORLEANS (FR); Turpin, Michel, 45240 La Fuerte Saint Aubin (FR)
(74) Mandataire: Debay, Yves

(57) **Abrégé**

La présente invention concerne un support (1) pour collier qui comprend au moins deux logements (3) agencés pour recevoir chacun un collier (2) simple, chaque logement (3) comprenant un moyen (4) de fixation pour fixer le collier (2) simple reçu dans chaque logement (3), les deux logements (3) étant reliés entre eux par une partie (5) centrale comprenant un moyen de fixation (6) à un support fixe.

## Description

La présente invention concerne un collier de fixation destiné à fixer des objets, de préférence uni-axiaux allongés quelconques, par exemple, des tuyaux, des câbles, des fils, sur un support quelconque, comme par exemple, un mur, une planche, etc.

L'invention concerne plus particulièrement un double collier de fixation pour tuyauterie ou analogue, sans vis et à montage rapide.

Les colliers de fixation sont couramment utilisés dans les installations électriques et de plomberie pour fixer sur un support comme par exemple, un mur, des objets uni-axiaux allongés tels que, par exemple, un tuyau, un câble, un fil, etc.

Dans la plupart des cas, les colliers de fixation ne permettent de ne fixer qu'un objet uni-axial allongé. Or, dans certaines installations, il peut être nécessaire d'installer parallèlement plus d'un objet uni-axial. Pour cela, il existe déjà des doubles colliers de fixation. Ce type de collier est constitué de deux élément distincts formant chacun deux demi-colliers alignés côte à côte. Un des éléments est fixe et l'autre forme une double bride mobile. Les extrémités de chaque élément se prolongent par une patte. Les pattes des deux éléments coopèrent deux à deux et forment deux systèmes de fixation pour verrouiller le double collier. Ce type de double collier n'est pas modulable car il est utilisé pour deux objets uni-axiaux de mêmes diamètres ou de même type. Il ne permet pas facilement de fixer deux objet uni-axiaux de diamètres différents ou de nature différente telle que, par exemple, un tuyau un câble électrique.

La présente invention a pour but de pallier certains inconvénients de l'art antérieur en proposant un support pour collier de fixation sans vis et à montage rapide et modulable.

Ce but est atteint par un support pour collier **caractérisé en ce qu'il** comprend au moins deux logements agencés pour recevoir chacun un collier simple, chaque logement comprenant un moyen de fixation pour fixer le collier simple reçu dans chaque logement, les deux logements étant reliés entre eux par une partie centrale comprenant un moyen de fixation à un support fixe.

Selon une autre particularité, le moyen de fixation à un support fixe comprend au moins un filet sur au moins une partie de la circonférence d'un trou formé sur la partie centrale.

Selon une autre particularité, le moyen de fixation à un support fixe comporte un écrou serti dans la partie centrale.

Selon une autre particularité, le moyen de fixation pour fixer le collier simple reçu dans chaque logement est formé par au moins deux ergots sur deux parois latérales et opposées du logement.

Selon une autre particularité, le support est en matière plastique.

Selon une autre particularité, le support est une coque métallique en forme générale de S, les logements étant situés aux extrémités du S, les logements étant formés par les parois de la coque et une languette découpée au fond de la coque et pliée à l'intérieure de la coque perpendiculairement au fond de la coque, les ergots étant formés par des languettes découpées sur les parois latérales de la coque et pliées vers l'intérieur de la coque.

L'invention concerne aussi un collier simple pour support selon l'invention, le collier simple formant deux demi-colliers complémentaires, un des deux demi-colliers comportant une entretoise, chaque demi-collier formant au moins un logement de forme concave partiellement tubulaire prévu pour le passage de la tuyauterie ou analogue lorsque les deux demi-colliers sont assemblés, chaque demi-collier se prolongeant vers l'extérieur de chaque coté pour former au moins une patte, une première patte comprenant une ouverture et un moyen de fixation et une seconde patte étant prolongée par une languette de largeur inférieure à celle du collier comprenant un second moyen de fixation, les deux demi-colliers étant rigidement solidaires par l'intermédiaire d'au moins une languette, ladite languette étant destinée à être pliée en deux de façon à amener les deux concavités des demi-colliers en vis-à-vis et en ce que les moyens de fixation coopèrent entre eux pour verrouiller le collier lorsque la languette est insérée dans l'ouverture.

Selon une autre particularité, l'entretoise du collier simple est destinée à être installée au fond du logement, les ergots retenant l'entretoise au fond du logement en faisant appui sur les bords de l'entretoise.

Selon une autre particularité, les logements ayant une forme complémentaire à la forme d'une l'entretoise d'un collier simple sont disposés l'un par rapport à l'autre de telle manière que l'entretoise d'un collier simple est parallèle à l'entretoise de l'autre collier simple et de façon symétrique par rapport à la partie centrale.

Selon une autre particularité, le fond de chaque logement comprend un tenon faisant sailli pour pénétrer dans un trou agencé dans l'entretoise du collier simple.

Selon une autre particularité, au moins un joint est agencé sur la face intérieure d'au moins un demi-collier.

D'autres particularités et avantages de la présente invention apparaîtront plus clairement à la lecture de la description ci-après, faite en référence aux dessins annexés, dans lesquels :

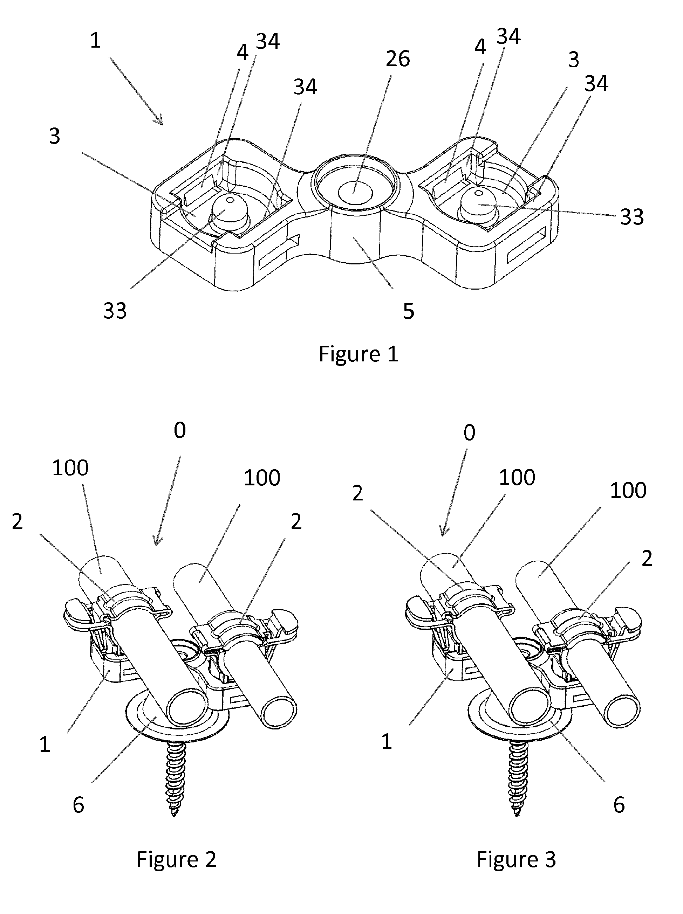

- la figure 1 représente une vue en perspective du support selon une configuration,
- la figure 2 représente une vue en perspective du support selon la configuration de la figure 1 avec des colliers simples avec lesquels est fixée de la tuyauterie de même diamètre,
- la figure 3 représente une vue en perspective du support selon la configuration de la figure 1 avec des colliers simples avec lesquels est fixée de la tuyauterie de diamètre différent,

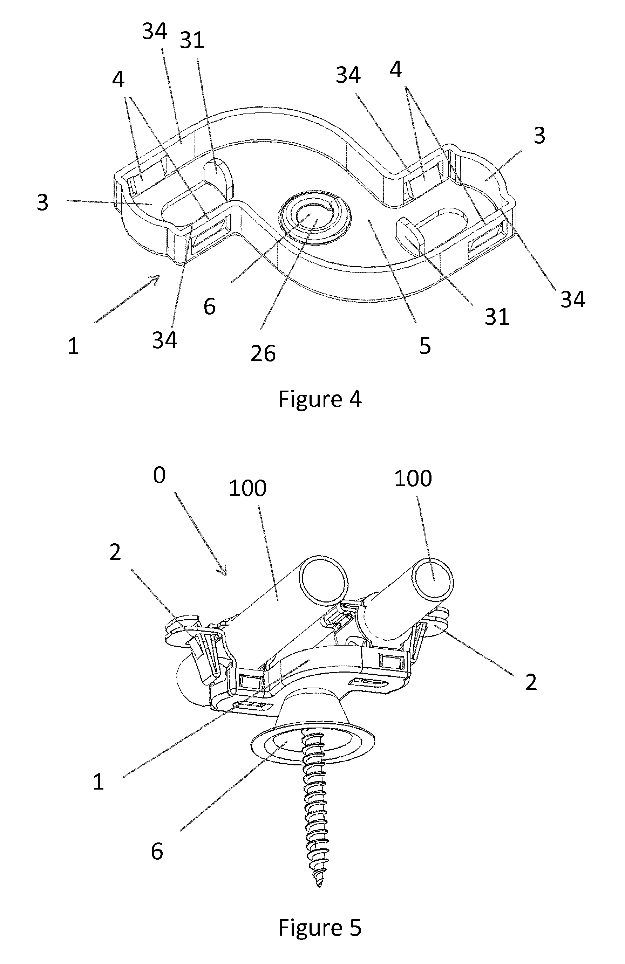

- la figure 4 représente une vue en perspective du support selon une autre configuration,
- la figure 5 représente une vue en perspective du support selon la configuration de la figure 4 avec des colliers simples avec lesquels est fixée de la tuyauterie de diamètre différent avec un joint agencé sur la face intérieure d'au moins un demi-collier,

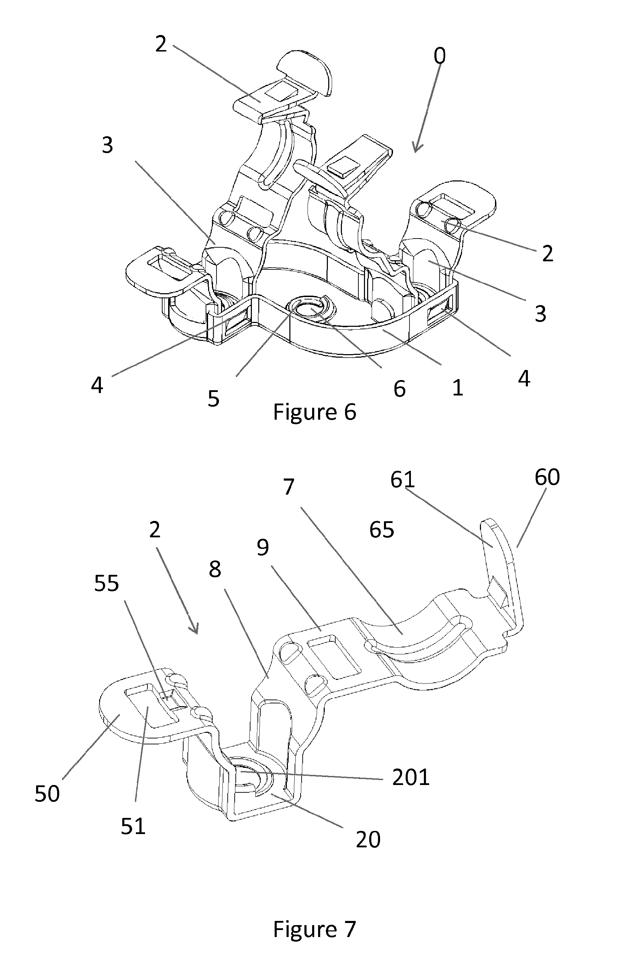

- la figure 6 représente un vue en perspective du support selon la configuration de la figure 4 avec des colliers simples dans lesquels les colliers simples sont en position ouverte,
- la figure 7 représente une vue en perspective d'un collier simple en position ouverte,
- la figure 8 représente une vue en perspective du support selon une configuration avec clavette avec des colliers simples détachés du support,
- la figure 9 représente une vue en perspective du support selon la configuration de la figure 8 avec des colliers simples disposés dans les logements support et les clavettes non insérées dans le support,
- la figure 10 représente une vue en perspective du support selon la configuration 8 et la configuration 9 avec des colliers simples fixée dans les logements du support avec les clavettes insérées
- la figure 11 représente une vue en perspective selon la configuration des figures 8 à 10 avec des colliers simples fixés au support portant de la tuyauterie.

Dans la suite de la description, nous ferons références aux figures listées ci-dessus.

L'invention concerne un support (1). Ce support (1) est monobloc.

Dans la suite de la description, le mot tuyauterie (100) sera utilisé mais il faudra comprendre que l'invention n'est pas limitée à la tuyauterie. L'invention peut être utilisée pour des câbles, des fils, etc., c'est-à-dire tous objets uni-axiaux allongés.

Le support (1) comprend au moins deux logements (3) agencés pour recevoir chacun un collier (2) simple amovible. Chaque logement (3) comprend un moyen (4) de fixation pour fixer le collier (2) simple reçu dans chaque logement (3). Les deux logements (3) sont reliés entre eux par une partie (5) centrale comprenant un moyen de fixation (6) à un support fixe.

Chaque logement possède au moins deux parois (34) latérales opposées parallèles. Cette forme de logement permet que les colliers fixés dans ces logements de ne pas bouger en rotation selon un axe perpendiculaire au support. Ceci permet d'éviter que les tuyaux puissent être déformés par des mouvements de rotation du collier dans son logement.

Le collier (2) simple est formé de deux demi-colliers (7, 8) complémentaires. Un des deux demi-colliers (7, 8) comportant une entretoise (20). Selon une configuration, l'entretoise (20) peut comprendre un trou (201) qui peut servir de moyen de fixation sur un support tel qu'un mur par exemple. Chaque demi-collier (7, 8) forme au moins un logement de forme concave partiellement tubulaire prévu pour le passage de la tuyauterie (100) ou analogue lorsque les deux demi-colliers (7, 8) sont assemblés. Chaque demi-collier (7, 8) se prolonge vers l'extérieur de chaque coté pour former au moins une patte (50, 60). Une première patte (50) comprenant une ouverture (51) et un moyen (55) de fixation et une seconde patte (60) est prolongée par une languette (61) de largeur inférieure à celle du collier (2) simple comprenant un second moyen (65) de fixation. Les deux demi-colliers (7, 8) sont rigidement solidaires par l'intermédiaire d'au moins une languette (9). Ladite languette (9) est destinée à être pliée en deux de façon à amener les deux concavités des demi-colliers (7, 8) en vis-à-vis. Les moyens de fixation (55, 65) coopèrent entre eux pour verrouiller le collier (2) simple sans vis lorsque la languette (61) est insérée dans l'ouverture (51).

Selon une configuration, pour un même double collier, le diamètre du cercle formé par deux demi-colliers complémentaires pour un collier (2) simple peut être différent du diamètre du cercle formé par deux demi-colliers complémentaires pour un autre collier (2) simple. Ainsi, si les diamètres des deux tuyauteries devant être fixées par le double collier sont différents, il est possible de placer dans un logement du support un collier simple dont le diamètre du cercle formé par deux demi-colliers complémentaires est adapté à une tuyauterie et de placer dans l'autre logement du support un collier simple dont le diamètre du cercle formé par deux demi-colliers complémentaires est adapté à l'autre tuyauterie.

Le moyen (4) de fixation pour fixer le collier (2) simple reçu dans chaque logement (3) est formé par au moins deux ergots sur deux parois (34) latérales et opposées du logement (3). L'entretoise (20) du collier (2) simple est installée au fond du logement (3) par clippage des ergots. Les ergots retiennent l'entretoise (20) au fond du logement en faisant appui sur les bords de l'entretoise (20).

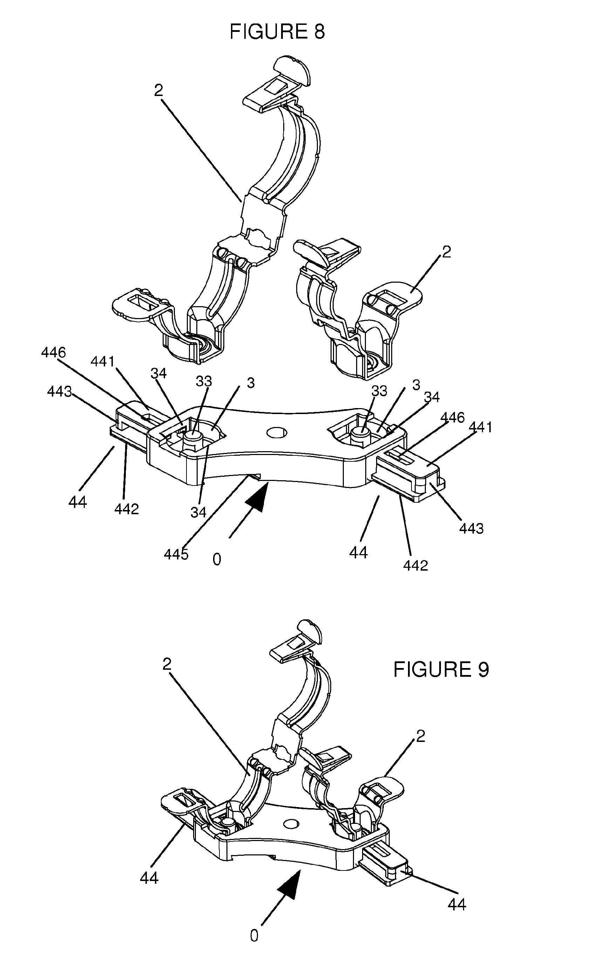

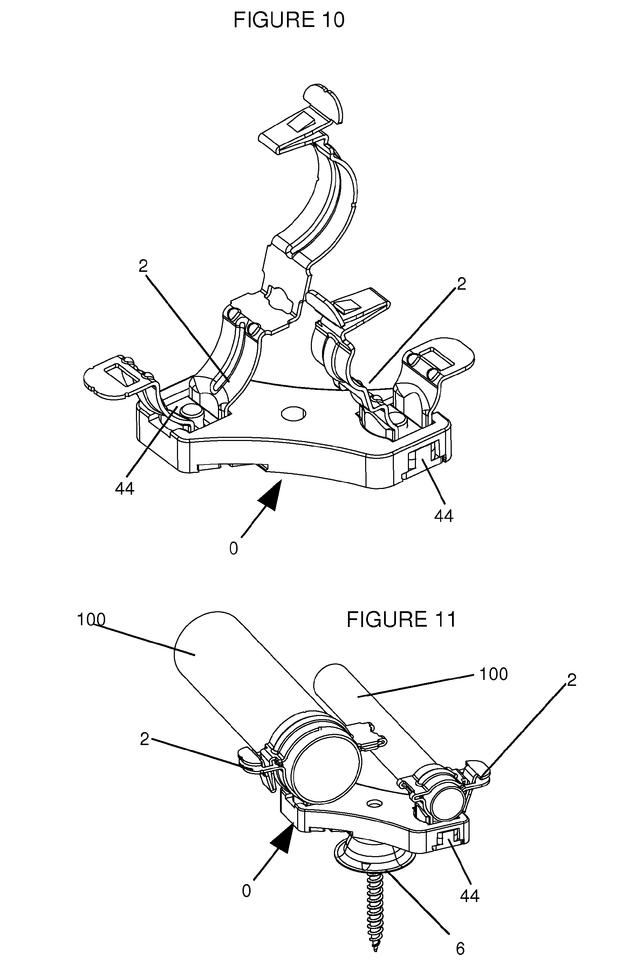

Selon une configuration représentée sur les figures 8 à 11, le moyen (44) de fixation pour fixer le collier (2) simple est une clavette (44) s'insérant dans le logement (3) du support(1). Cette clavette peut être formée de deux parties (441, 442) parallèles. Ces deux parties sont liées entre elles à une de leurs extrémités (443) par une partie perpendiculaire aux deux parties parallèles en forme de languette. L'extrémité libre de la première partie (441) traverse une des deux parois (34) latérales opposées parallèles du logement par une ouverture dans la paroi de telle sorte que les deux parties (441, 442) parallèles de la clavette (44) prennent en sandwich l'entretoise (20) d'un collier (2) simple apte à être fixé et le fond du logement (3) lorsque la clavette est insérée dans le support. La clavette arrive en fin de course lorsque la partie (443) perpendiculaire aux deux parties parallèles vient en butée avec le fond du logement. En fin de course, la clavette peut s'encliqueter par un moyen (444) d'encliquetage. Ce moyen d'encliquetage (444) peut être une saillie située sur l'extrémité libre de la deuxième partie (442) qui coopère avec un évidement sur la face opposée à la face formant le fond du logement. La clavette peut être guidée par au moins un rail (445) formé sur la face opposée à la face formant le fond du logement (3).

Selon une configuration, les logements (3) ont une forme complémentaire à la forme d'une l'entretoise (20) d'un collier (2) simple. Les logements (3) sont disposés l'un par rapport à l'autre de telle manière que l'entretoise (20) d'un collier (2) simple est parallèle à l'entretoise (20) de l'autre collier (2) simple et de façon symétrique par rapport à la partie (5) centrale.

Selon une configuration, le moyen (6) de fixation à un support fixe comporte au moins un filet sur au moins une partie de la circonférence d'un trou (26) formé sur la partie (5) centrale.

Selon une configuration, le moyen de fixation à un support fixe comporte un écrou serti dans la partie (5) centrale.

Selon une configuration, au moins un joint (22) est agencé sur la face intérieure d'au moins un demi-collier. Ce joint (22) permet, par exemple, d'ajuster le diamètre du cercle formé par deux demi-colliers complémentaires au diamètre de la tuyauterie destiné à être retenue par les deux demi-colliers.

Selon une configuration, le support (1) peut être en matière plastique. Selon une variante de la configuration, le fond de chaque logement peut comprendre un tenon (33) faisant sailli dans le logement pour pénétrer dans le trou (201) du collier (1) simple situé dans l'entretoise (20). Ce tenon permet de maintenir le collier (2) simple dans le logement (3) de manière fixe par rapport au support (1). Lorsque le moyen (44) de fixation est une clavette, la première partie (441) en forme de languette peut comprendre une fente (446) pour laisser le passage du tenon (33) lorsque la clavette est

Selon une autre configuration, le support (1) est une coque métallique en forme générale de S. Les logements (3) sont situés aux extrémités du S. Les logements (3) sont formés par le fond de la coque, les parois de la coque et une languette (31) découpée au fond de la coque et pliée à l'intérieure de la coque perpendiculairement au fond de la coque. Les ergots sont formés par des languettes découpées sur les parois latérales de la coque et pliées vers l'intérieur de la coque.

L'invention présente permet ainsi d'obtenir un double collier modulable. Le support permet, en effet, de recevoir des simples colliers dont les demi-colliers complémentaires formes des diamètres différents. Ainsi, par exemple, il est possible de choisir un premier collier simple pour un premier tuyau d'un diamètre D1 et un deuxième collier simple pour un deuxième tuyau d'un diamètre D2 différent du diamètre D1 du premier tuyau, chaque collier simple étant logé dans les logements du support.

La présente description détaille différents modes de réalisation et configuration en référence à des figures et/ou des caractéristiques techniques. L'homme du métier comprendra que les diverses caractéristiques techniques des divers modes ou configurations peuvent être combinées entre elles à moins que l'inverse ne soit explicitement mentionné ou que ces caractéristiques techniques ne soient incompatibles. De même, une caractéristique technique d'un mode de réalisation ou d'une configuration peut être isolée des autres caractéristiques techniques de ce mode de réalisation à moins que l'inverse ne soit mentionné. Dans la présente description, de nombreux détails spécifiques sont fournis à titre illustratif et nullement limitatif, de façon à détailler précisément l'invention. L'homme de métier comprendra cependant que l'invention peut être réalisée en l'absence d'un ou plusieurs de ces détails spécifiques ou avec des variantes. À d'autres occasions, certains aspects ne sont pas détaillés de façon à éviter d'obscurcir et alourdir la présente description et l'homme de métier comprendra que des moyens divers et variés pourront être utilisés et que l'invention n'est pas limitée aux seuls exemples décrits.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Support (1) pour collier **caractérisé en ce qu'il** comprend au moins deux logements (3) agencés pour recevoir chacun un collier (2) simple formant deux demi-colliers (7, 8) dont un des demi-colliers comporte une entretoise (20), chaque logement (3) comprenant un moyen (4, 44) de fixation pour fixer le collier (2) simple reçu dans chaque logement (3), les deux logements (3) étant reliés entre eux par une partie (5) centrale comprenant un moyen de fixation (6) à un support fixe, chaque logement ayant deux parois (34) latérales opposées parallèles.

2. Support (1) selon la revendication 1, **caractérisé en ce que** le moyen (6) de fixation à un support fixe comprend au moins un filet sur au moins une partie de la circonférence d'un trou (26) formé sur la partie (5) centrale.

3. Support (1) selon les revendications 1 et 2, **caractérisée en ce que** le moyen de fixation à un support fixe comporte un écrou serti dans la partie (5) centrale.

4. Support (1) selon la revendication 1, **caractérisé en ce que** le moyen (4) de fixation pour fixer le collier (2) simple reçu dans chaque logement (3) est formé par au moins deux ergots sur deux parois latérales et opposées du logement (3).

5. Support (1) selon la revendication 1, **caractérisé en ce que** le moyen (44) de fixation pour fixer le collier (2) simple est une clavette (44) formée de deux parties (441, 442) parallèles et liées entre elles à une de leurs extrémités (443), la première partie (441) traversant une des deux parois latérales opposées parallèles du logement de telle sorte que les deux parties (441, 442) parallèles de la clavette (44) prennent en sandwich l'entretoise (20) d'un collier (2) simple apte à être fixé et le fond du logement (3).

6. Support (1) selon la revendication 1, **caractérisé en ce que** le support (1) est en matière plastique.

7. Support (1) selon la revendication 1, **caractérisé en ce que** le support (1) est une coque métallique en forme générale de S, les logements (3) étant situés aux extrémités du S, les logements (3) étant formés par les parois de la coque et une languette (31) découpée au fond de la coque et pliée à l'intérieure de la coque perpendiculairement au fond de la coque, les ergots étant formés par des languettes découpées sur les parois latérales de la coque et pliées vers l'intérieur de la coque.

8. Support (1) selon les revendications 1 ou 7, **caractérisé en ce que** les logements (3) ayant une forme complémentaire à la forme d'une entretoise (20) d'un collier (2) simple sont disposés l'un par rapport à l'autre de telle manière que l'entretoise (20) d'un collier (2) simple est parallèle à l'entretoise (20) de l'autre collier (2) simple et de façon symétrique par rapport à la partie (5) centrale.

9. Support (2) selon une des revendications 1, 7 ou 8, **caractérisé en ce que** le fond de chaque logement comprend un tenon (33) faisant saillie pour pénétrer dans un trou (201) agencé dans l'entretoise (20) du collier (2) simple.

10. Collier (2) simple pour support (1) selon les revendications 1 à 9, **caractérisé en ce que** le collier (2) simple forme deux demi-colliers (7, 8) complémentaires, un des deux demi-colliers (7, 8) comportant une entretoise (20), chaque demi-collier (7, 8) formant au moins un logement de forme concave partiellement tubulaire prévu pour le passage de la tuyauterie (100) ou analogue lorsque les deux demi-colliers (7, 8) sont assemblés, chaque demi-collier (7, 8) se prolongeant vers l'extérieur de chaque coté pour former au moins une patte (50, 60), une première patte (50) comprenant une ouverture (51) et un moyen (55) de fixation et une seconde patte (60) étant prolongée par une languette (61) de largeur inférieure à celle du collier (2) comprenant un second moyen (65) de fixation, les deux demi-colliers (7, 8) étant rigidement solidaires par l'intermédiaire d'au moins une languette (9), ladite languette (9) étant destinée à être pliée en deux de façon à amener les deux concavités des demi-colliers (7, 8) en vis-à-vis et **en ce que** les moyens de fixation (55, 65) coopèrent entre eux pour verrouiller le collier (2) lorsque la languette (61) est insérée dans l'ouverture (51).

11. Collier (2) selon la revendication 10, **caractérisé en ce que** l'entretoise (20) du collier (2) simple est destinée à être installée au fond du logement (3), les ergots retenant l'entretoise (20) au fond du logement en faisant appui sur les bords de l'entretoise (20).

12. Collier (2) selon les revendications 10 à 11, **caractérisée en ce qu'**au moins un joint (22) est agencé sur la face intérieure d'au moins un demi-collier.
